(19) Europäisches Patentamt
European Patent Office
Office européen des brevets

(11) Publication number : **0 290 932 B1**

# (12) EUROPEAN PATENT SPECIFICATION

(45) Date of publication of patent specification : **14.12.94 Bulletin 94/50**

(51) Int. Cl.$^5$ : **G03G 15/00,** G03G 15/052

(21) Application number : **88107099.9**

(22) Date of filing : **03.05.88**

(54) **Magnification changing system for a copier.**

(30) Priority : **09.05.87 JP 113071/87**
**09.05.87 JP 113072/87**

(43) Date of publication of application : **17.11.88 Bulletin 88/46**

(45) Publication of the grant of the patent : **14.12.94 Bulletin 94/50**

(84) Designated Contracting States : **DE FR GB**

(56) References cited :
**EP-A- 0 290 976**
**US-A- 4 505 579**
**US-A- 4 624 552**
**US-A- 4 650 317**
**US-A- 4 657 380**

(73) Proprietor : **Ricoh Company, Ltd**
**3-6, 1-chome Nakamagome**
**Ohta-ku Tokyo 143 (JP)**

(72) Inventor : **Sakata, Seiji**
**Ichigao Dormitory**
**4-7-8, Edanishi**
**Midori-ku Yokohama-shi Kanagawa-ken (JP)**

(74) Representative : **Schwabe - Sandmair - Marx**
**Stuntzstrasse 16**
**D-81677 München (DE)**

**EP 0 290 932 B1**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a magnification changing device for a copier as defined in one of claims 1 or 12.

A problem with a prior art copier is that in the event of a change of magnification it is difficult for a person to recognize the kind of data which the copier requests. Hence, the manual operation is complicated and awkward.

An image reproducing device according to the preamble of claim 1 is known from US-A-4,505,579. This device includes an input means for inputting a size of an original and a further input means for inputting a size of a copy paper. Based on the values inputted by these input means, a copy magnification calculation means calculates a particular copy magnification factor. This factor is calculated using the dimensions of the original and the copy paper in one direction.

According to US-A-4,657,380, an image reproducing device was proposed, which, within a predetermined range is able to set a longitudinal magnification ratio of a copied image against an original and also a lateral magnification ratio of a copied image against the original independently.

However, the above prior art is very complex and needs an operator with practice to be properly operated in each situation.

It is therefore an object of the present invention to provide a magnification changing device for a copier which is easy to operate.

It is another object of the present invention to provide a generally improved magnification changing device for a copier.

These objects are solved by the devices according to the present invention as defined by the independent claims 1 and 12. Usual embodiments are defined by the subclaims.

In accordance with the present invention, a magnification changing device for an image reproducing device comprises independent longitudinal and lateral magnification change modes and being arranged to display in an area the longitudinal magnification and the lateral magnification being set, characterized in that the device is arranged to display newly entered longitudinal and lateral magnifications in another area.

The above and other objects, features and advantages of the present invention will become more apparent from the following detailed description taken with the accompanying drawings in which:

Fig. 1 is a flowchart showing a x1 magnify mode;

Figs. 2 is a flowchart showing an enlarge mode;

Fig. 3 is a flowchart showing a relationship between magnification Nos. and magnifications;

Fig. 4 is a flowchart representative of a reduce mode;

Figs. 5 and 6 are flowcharts demonstrating a zoom down mode;

Figs. 7 and 8 are flowcharts demonstrating a zoom up mode;

Fig. 9 is a flowchart showing an independent dimension magnification change mode;

Fig. 10 is a flowchart showing an independent longitudinal mode;

Fig. 11 is a flowchart showing an independent lateral mode;

Figs. 12 to 15 are flowcharts each showing a dimension magnification change mode is a flowchart showing a dimension document lateral mode; and

Fig. 16 is a flowchart showing a subroutine "check magnification" for calculating magnifications.

Fig. 1 shows a flowchart representative of a x1 magnification mode. When a x1 switch is turned on, a MAX and a MIN display each showing data on the basis of independent dimension magnification change are turned off. Simultaneously, if automatic magnification selection (AMS) has been set up, it is cleared; if automatic paper selection (APS) has been set up, it is also cleared. If the x1 magnification mode has already been set up, a buzzer is not energized. Further, an independent and a dimension magnification change mode are cleared, dimension magnification change data (longitudinal and lateral dimensions of a document and those of a paper) are cleared, and "100 %" appears on the first line of the LCD.

Fig. 2 shows a procedure representative of an enlarge mode. When a reduce mode is turned on simultaneously with the manipulation of an enlarge switch, no operation occurs. As in the case of the x1 mode, AMS and APS processings are executed before energizing the buzzer. When the magnification is x1, reduction, independent longitudinal and lateral magnification or zoom 400 %, "115 %" is set; otherwise, a magnification higher by one step than the fixed magnification being displayed is set. The independent mode and the dimension magnification change mode are cleared, and the dimension magnification change data are erased. At this time, a magnification such as "115 %" appears on the first line of the LCD. Fig. 3 shows a relationship between magnification Nos. which are shown in the flowcharts and the magnifications.

Fig. 4 is a flowchart demonstrating a reduce mode. When the magnification is x1, independent longitudinal and lateral magnification, zoom 25 %, "93 %" is set; otherwise, a magnification lower by one step than the fixed magnification being displayed is set. The rest of the procedure is the same as in the enlarge mode.

Figs. 5 and 6 are flowcharts showing a zoom down (-) mode. When any of the enlarge, reduce and x1 keys are pressed, the operation of the zoom key is not accepted. When the zoom key is pressed for the first time, AMS and APS processings are effected to clear the dimension magnification change mode as well as dimension magnification change data. A 500 msec flag is set and, if the longitudinal magnification is 25 %, the buzzer is not energized. In the case of a mode other than the independent magnification change mode, the magnification is reduced by 1 %. If fixed magnification change which corresponds to the resulting magnification exists, a fixed magnification change display associated therewith is turned on. The magnification such as "91 %" is indicated on the first line of the liquid crystal display.

Here, the display may be provided in any of three different manners as shown below:

(1) 1st Line 100 % → 99 %

(2) Long. 125 % Lat. 90 % → 124 %

(3) → 89 %

Item (1) shown above is used to zoom down when the independent magnification change mode is not set up.

When the zoom key is pressed while the independent magnification change mode is set up, item (2) shows zoom down by using the longitudinal dimension as a reference, resetting the independent magnification change, and setting up the usual magnification change mode.

Item (3) shows zoom down by using the lateral dimension as a reference.

Although not shown in the flowcharts, an item (4) which zooms down in both of the longitudinal and lateral directions is available in the independent magnification mode, as shown below:

Long. 125 % Lat. 90 % → Long. 124 % Lat. 89 %

Item (4) is extremely effective when a person sets up a magnification in the independent magnification change mode or the dimension magnification change mode, then obtains copies, and then desires to slightly change the magnification.

Long. 125 % Lat. 90 % → Long. 124 % Lat. 90 %

Lat. Mag. Set 90 % Lat. Mag. Set 89 %

↑ flash ↑ flash

Thus the zooming items (2), (3) and (4) available in the independent magnification mode are memorized by a dip switch, a memory back-up. etc. In the independent magnification change mode, the independent magnification data are sequentially reduced.

Specifically, with reference to Fig. 6, when a magnification of less than 25 % is set (in this particular mode, magnification data can be set by using the numeral keys and zoom key), a magnification of 25 % is set; when a magnification of more than 400 % is set, a magnification of 400 % is set.

As the zoom key is continuously pressed, the buzzer is energized at the first time and the first zoom-down is effected at 500 msec, and the buzzer is deenergized at the second time and onward and the zoom-down is effected at 200 msec.

Figs. 7 and 8 are flowcharts showing a zoom up (+) mode. This mode is basically the same as the zoom down mode of Figs 5 and 6 and, therefore, details thereof will not be described to avoid redundancy.

Fig. 9 shows an independent or a dimension magnification change mode. As shown, even when any of the independent and dimension magnification change switches is pressed, the input is not accepted if any of the x1, enlarge, reduce and zoom switches has been depressed.

Fig 10 shows an independent lateral mode. Specifically, when the independent lateral switch is pressed, the dimension magnification change mode as well as data associated therewith is cleared. If the independent lateral mode has already been set up, the magnification is checked.

If the independent magnification change data (see Fig. 16) is greater than 400 %, 400 % is set while, at the same time, the MAX indicator is turned on. If it is smaller than 25 %, 25 % is set, the MIN indicator is turned on.

The independent magnification is set as the lateral magnification, and the longitudinal and lateral magnifications are displayed on the first line of the LCD.

Long. 100 % Lat. 100 % → Long. 100 % Lat. 86 %

Lat. Mag. Set 86 %

↑ flash

If the current mode is not the independent lateral magnification change mode, the mode is set.

If the independent longitudinal magnification change mode has been set up (see fig 9), the independent magnification is set as the longitudinal magnification and then the independent lateral magnification mode is set up (see fig. 11)

(1) 100 % → Long. 100 % Lat. 100 %

↑ flash

(2) Long. 150 % Lat. 210 % → Long. 150 % Lat. 210 %

Lat. Mag. Set 210 %

(3) Long. 150 % Lat. 210 % → Long. 167 % Lat. 210 %

Long. Mag. Set 167 % Lat. Mag. Set 210 %

Item (1) shown above exemplifies a case wherein the current magnification change mode is replaced with the independent lateral magnification change mode. Item (2) exemplifies a case wherein the independent magnification change mode is replaced with the independent lateral magnification change mode. Further, item (3) exemplifies a case wherein the independent longitudinal magnification change mode is replaced with the independent lateral magnification change mode.

As stated above, in the independent magnification change mode, a work area is provided for setting a magnification other than the current longitudinal and lateral magnifications, and the indicator associated with the desired magnification is caused to flash. This allows a person to compare the desired magnification and the current magnification and, in addition, facilitates the recognition by the flashing of the magnification data. Further, since the magnification data may be entered by using the zoom key in place of the numeral keys, fine adjustment and easy operation are achieved.

The independent magnification data in the work area will be set as the longitudinal magnification or the magnification at any of the following exemplary timings:

(1) when the same key is pressed, i.e. when data is set in the independent lateral magnification change mode, and then the independent lateral magnification change key is pressed again;

(2) when any other independent magnification change key is pressed, i.e. when data is set in the independent longitudinal magnification change mode, and then the independent lateral magnification change key is pressed to set the longitudinal data;

(3) when the enter key (# key) is pressed; and

(4) when the print switch is pressed.

Fig. 11 shows an independent longitudinal mode which is essentially the same as the independent lateral mode of Fig. 10 and, hence, details thereof will not be described.

Figs. 12 to 15 are flowcharts each showing a dimension magnification change mode. Specifically, Fig. 12 shows a dimension document lateral mode. In this mode, when the dimension document lateral switch is pressed, the independent magnification change mode is cleared. If the document lateral input mode has been set up, it is checked whether the lateral dimension of a copy and that of a document have been entered. If they have been entered, the respective magnifications are calculated and set by the subprogramm according to Fig. 16. Thereafter, the longitudinal and lateral magnifications are displayed on the first line of the LCD. If any of the longitudinal and lateral dimensions have not been entered, the former magnification before calling the dimension magnification change is displayed because no new magnification can be calculated.

(1) Exemplary case wherein the longitudinal and lateral dimensions are entered

| | | |
|---|---|---|
| document | long. 98 mm | lat. 100 mm |
| copy | long. 50 mm | lat. 120 mm |

then,

long. mag. 51 % lat. mag. 120 %

(2) Exemplary case wherein only the lateral dimensions of a copy and a document are entered (assuming that the previous magnification is 100 %)

| | | |
|---|---|---|
| document | long. 98 mm | lat. 100 mm |
| copy | long. | lat. 120 mm |

then,

long. mag. 100 % lat. mag. 120 %

When the dimension document lateral input mode is not set up, the mode is set; when any size data is preserved, the size data is displayed; and when no such data is preserved, dots "... ..." are displayed and caused to flash.

(1) Exemplary case wherein no size data is entered

| | | |
|---|---|---|
| document | long. mm | lat. ... ... mm |
| copy | long. mm | lat. mm |

Here, the dots "... ..." indicative of a document lateral size flash.

(2) Exemplary case wherein previously entered size data are preserved

| | | |
|---|---|---|
| document | long. 98 mm | lat. 100 mm |
| copy | long. 50 mm | lat. 120 mm |

Here, "100" indicative of the document lateral dimension flashes.

Figs. 13 to 15 show other dimension magnification change modes which are essentially the same as that shown in Fig 12, such as a dimension document longitudinal mode, a dimension copy lateral mode and a dimension copy longitudinal mode.

As described above, when any one of the document longitudinal and lateral and the copy longitudinal and lateral keys is pressed, all the data are displayed and recognizable with ease. Further, if data has already been entered, dots "... ..." flash to show a person particular data being entered. These dimension size data will be erased only when a magnification change key other than the dimension magnification change keys is pressed and in the event of automatic resetting. For example, after a person has entered the dimensions and then operated the copier to produce a copy, he or she can readily change the dimensions by looking at the size data being preserved.

The longitudinal and lateral magnifications will be calculated at any of the following timings:

(1) when the same key is pressed again;

(2) when the enter key (# key) is pressed; and

(3) when the print switch is pressed.

In summary, it will be seen that the present invention provides a system which allows a person to readily enter required data in a magnification change mode operation of a copier.

Various modifications will become possible for those skilled in the art after receiving the teachings of the present disclosure without departing from the scope thereof.

## Claims

1. An image reproducing device comprising independent longitudinal and lateral magnification change modes and being arranged to display in an area the longitudinal and lateral magnification being set, **characterized** in that the device is arranged to display newly entered longitudinal or lateral magnifications in another area.

2. The device claimed in claim 1, arranged to flash newly entered data or dots in said another area.

3. The device claimed in claim 1 or 2, wherein numeral keys or a zoom key are provided to enter a magnification.

4. The device claimed in any of claims 1 to 3, arranged to display a maximum value or a minimum value as new magnification and to produce in use a warning at the same time when the new magnification entered is greater than a pre-determined maximum value or smaller than a predetermined minimum value.

5. The device as claimed in one of claims 1 to 4, wherein when an enlarge key is pressed, all of the fixed magnification changes and magnifications available in an enlarge mode are displayed and, when a reduce key is pressed, all of the fixed magnification changes and magnifications available in a reduce mode are displayed.

6. The device as claimed in claim 5, wherein in the event of independent longitudinal and lateral magnification changes only magnifications are displayed and, in the event of an independent magnification change, a longitudinal and a lateral magnification are displayed.

7. The device as claimed in one of claims 5 or 6, wherein when the same magnification as any of the fixed magnification changes is reached during zoom up or zoom down, all the fixed magnification changes (reduction or enlargement) and magnifications are displayed.

8. The device as claimed in claims 6 or 7, wherein when the magnification differs from the fixed magnifications all the displays are turned off.

9. The device as claimed in one of claims 7 or 8, wherein when zoom-up or zoom-down is effected at the time of independent magnification change mode being set the independent magnification change mode is cleared with the longitudinal magnification as a reference.

10. The device as claimed in one of claims 7 to 9, wherein when zoom-up or zoom-down is effected at the time of independent magnification change mode being set the independent magnification change mode is cleared with the lateral dimension as a reference.

11. The device as claimed in one of claims 7 to 10, wherein when zoom-up or zoom-down is effected at the time of independent magnification change mode being set both the longitudinal and lateral dimensions are increased or decreased.

12. An image reproducing device comprising
    - dimension magnification change modes, each of said modes allowing the change of one respective dimension of the longitudinal and lateral dimensions of the original or document to be copied and of the copy,
    - keys to input said modes;
    - a display arranged to display longitudinal and lateral dimensions of the original or document to be copied and of the copy;

    the device being arranged so that if a mode is selected and its respective dimension is newly entered, the newly entered dimension is displayed together with the unchanged dimensions.

13. The device as claimed in claim 12, wherein when entered data is present, said data and/or an underline is caused to flash while, when no data is present, only the underline is caused to flash.

14. The device as claimed in one of claims 12 or 13, wherein the magnification change modes are independent and when the dimensional magnification change is entered in the independent magnification change mode, the independent magnification change is reset.

15. The device as claimed in one of claims 12 to 14, wherein, when one particular of the keys is pressed, simultaneously with any of a zoom key, an enlarge key and a reduce key, priority is given to said particular key.

16. The device as claimed in one of claims 12 to 15, wherein dimension data are erased when another magnification change key is pressed or when automatic resetting is executed.

17. The device as claimed in one of claims 12 to 16, wherein a magnification is calculated when the same key is pressed again, when an enter key is pressed, or when a start key is pressed.

18. The device as claimed in claim 17, wherein a magnification is not changed when both the longitudinal dimension of a copy and the longitudinal dimension of a document are not entered.

19. The device as claimed in one of claims 17 or 18, wherein a magnification is not changed when both the lateral dimension of a copy and the lateral dimension of a document are not entered.

20. The device as claimed in one of claims 17 to 19, wherein when data set is greater than a maximum value of magnification change or smaller than a minimum value, said maximum value or said minimum value are selected as data while, at the same time, a warning is produced.

## Patentansprüche

1. Vorrichtung zum Reproduzieren von Bildern mit unabhängigen longitudinalen und lateralen Vergrößerungsänderungs-Betriebsarten, und die ausgebildet ist, um die eingestellte longitudinale und laterale Vergrößerung in einem Bereich darzustellen, **dadurch gekennzeichnet**, daß die Vorrichtung dazu eingerichtet ist, um die neu eingegebenen longitudinalen oder lateralen Vergrößerungen in einem anderen Bereich darzustellen.

2. Vorrichtung nach Anspruch 1, die ausgebildet ist, um neu eingegebene Daten oder Punkte in dem anderen Bereich aufleuchten zu lassen.

3. Vorrichtung nach einem der Ansprüche 1 oder 2, in der numerische Tasten oder eine Zoom-Taste vorgesehen sind, um eine Vergrößerung einzugeben.

4. Vorrichtung nach einem der Ansprüche 1 bis 3, die ausgestattet ist, um einen maximalen Wert und einen minimalen Wert als neue Vergrößerung darzustellen, und und um beim Gebrauch eine Warnung zu der gleichen Zeit zu erzeugen, wenn die neu eingegebene Vergrößerung größer ist als ein vorbestimmter maximaler Wert oder kleiner ist als ein vorbestimmter minimaler Wert.

5. Vorrichtung nach einem der Ansprüche 1 bis 4, in der, wenn eine Vergrößerungstaste gedrückt wird, sämtliche der festgelegten Vergrößerungsänderungen und Vergrößerungen, die in einer Vergrößerungsbetriebsart verfügbar sind, dargestellt werden, und, wenn eine Verkleinerungstaste gedrückt wird, sämtliche der in einer Verkleinerungsbetriebsart verfügbaren festen Vergrößerungsänderungen und Vergrößerungen dargestellt werden.

6. Vorrichtung nach Anspruch 5, in der bei dem Auftreten von unabhängigen longitudinalen und lateralen Vergrößerungsänderungen nur Vergrößerungen dargestellt werden und bei dem Auftreten von unabhängigen Vergrößerungsänderungen eine longitudinale und eine laterale Vergrößerung dargestellt werden.

7. Vorrichtung nach einem der Ansprüche 5 oder 6, in der, wenn die gleiche Vergrößerung wie eine der festgelegten Vergrößerungsänderungen während des Abwärts- bzw. Herab- oder des Aufwärts- bzw. Heraufzoomens erreicht wird, sämtliche der festgelegten Vergrößerungsänderungen (Verkleinerung oder Vergrößerung) und Vergrößerungen dargestellt werden.

8. Vorrichtung nach einem der Ansprüche 6 oder 7, in der, wenn die Vergrößerung von den festgelegten Vergrößerungen abweicht, sämtliche Darstellungen abgestellt werden.

9. Vorrichtung nach einem der Ansprüche 7 oder 8, in der, wenn Herauf- oder Herabzoomen zu der Zeit einer unabhängigen Vergrößerungsänderungs-Betriebsart, die eingestellt ist, vorgenommen wird, die unabhängige Vergrößerungsänderungs-Betriebsart mit der longitudinalen Vergrößerung als einem Hinweis gelöscht wird.

**10.** Vorrichtung nach einem der Ansprüche 7 bis 9, in der, wenn Herauf- oder Herabzoomen zu der Zeit vorgenommen wird, wenn eine unabhängige Vergrößerungsänderungs-Betriebsart eingestellt ist, die unabhängige Vergrößerungsänderungs-Betriebsart mit der lateralen Dimension als einem Hinweis gelöscht wird.

**11.** Vorrichtung nach einem der Ansprüche 7 bis 10, in der, wenn Herauf- oder Herabzoomen zu der Zeit einer unabhängigen Vergrößerungsänderungs-Betriebsart vorgenommen wird, sowohl die longitudinalen als auch die lateralen Dimensionen vergrößert oder verkleinert werden.

**12.** Vorrichtung zur Reproduktion von Bildern

- mit Dimensions-Vergrößerungsänderungs-Betriebsarten, wobei jede der Betriebsarten die Änderung einer jeweiligen Dimension der longitudinalen und lateralen Dimension des Originals oder des zu kopierenden Dokuments und der Kopie ermöglicht;
- mit Tasten zum Eingeben der Betriebsarten;
- mit einem Darstellungsbereich, der angeordnet ist, um longitudinale und laterale Dimensionen des Originals oder des zu kopierenden Dokuments und der Kopie darzustellen;

wobei die Vorrichtung so ausgebildet ist, daß wenn eine Betriebsart ausgewählt ist und ihre jeweilige Dimension neu eingegeben wird, die neu eingegebene Dimension zusammen mit den unveränderten Dimensionen dargestellt wird.

**13.** Vorrichtung nach Anspruch 12, in der, wenn eingegebene Daten vorhanden sind, die Daten und/oder eine Unterstreichung zum Leuchten bzw. Blinken veranlaßt werden, während, wenn keine Daten vorhanden sind, nur die Unterstreichung zum Leuchten bzw. Blinken veranlaßt wird.

**14.** Vorrichtung nach einem der Ansprüche 12 oder 13, in der die Vergrößerungsänderungs-Betriebsarten unabhängig sind, und, wenn die dimensionsmäßige Vergrößerungsänderung in der unabhängigen Vergrößerungsänderungs-Betriebsart eingegeben wird, die unabhängige Vergrößerungsänderung zurückgesetzt wird.

**15.** Vorrichtung nach einem der Ansprüche 12 bis 14, in der, wenn eine bestimmte Taste gleichzeitig mit einer Zoomtaste, einer Vergrößerungstaste und einer Verkleinerungstaste gedrückt wird, der bestimmten Taste Vorrang gegeben wird.

**16.** Vorrichtung nach einem der Ansprüche 12 bis 15, in der Dimensionsdaten gelöscht werden, wenn eine andere Vergrößerungsänderungstaste gedrückt wird, oder wenn eine automatische Rücksetzung ausgeführt wird.

**17.** Vorrichtung nach einem der Ansprüche 12 bis 16, in der eine Vergrößerung berechnet wird, wenn die gleiche Taste wieder gedrückt wird, wenn eine Eingabetaste gedrückt wird, oder wenn eine Starttaste gedrückt wird.

**18.** Vorrichtung nach Anspruch 17, in der eine Vergrößerung nicht geändert wird, wenn sowohl die longitudinale Dimension einer Kopie als auch die longitudinale Dimension eines Dokuments nicht eingegeben werden.

**19.** Vorrichtung nach einem der Ansprüche 17 oder 18, in der eine Vergrößerung nicht geändert wird, wenn sowohl die laterale Dimension einer Kopie als auch die laterale Dimension eines Dokuments nicht eingegeben werden.

**20.** Vorrichtung nach einem der Ansprüche 17 bis 19, in der, wenn ein Datensatz größer ist als ein Maximalwert oder kleiner ist als ein Minimalwert der Vergrößerungsänderung, der Maximalwert oder der Minimalwert als Datum bzw. Daten ausgewählt werden, während zur gleichen Zeit eine Warnung erzeugt wird.

**Revendications**

1. Dispositif de reproduction d'image comprenant des modes de modifications d'agrandissements longitudinal et latéral indépendants et étant agencé pour afficher dans une zone l'agrandissement longitudinal et latéral qui est établi, caractérisé en ce que le dispositif est agencé pour afficher des agrandissements longitudinaux ou latéraux nouvellement entrés dans une autre zone.

2. Dispositif selon la revendication 1, agencé pour éclairer des données ou des points nouvellement entrés dans ladite autre zone.

3. Dispositif selon la revendication 1 ou 2, dans lequel des touches numériques ou une touche zoom sont prévues afin d'entrer un agrandissement.

4. Dispositif selon l'une quelconque des revendications 1 à 3, agencé pour afficher une valeur maximum ou une valeur minimum en tant que nouvel agrandissement et pour produire en utilisation un avertissement à l'instant où le nouvel agrandissement entré est supérieur à une valeur maximum prédéterminée ou inférieur à une valeur minimum prédéterminée.

5. Dispositif selon l'une quelconque des revendications 1 à 4, dans lequel, lorsqu'une touche agrandissement est activée, toutes les modifications d'agrandissement fixées et tous les agrandissements fixés disponibles dans un mode agrandissement sont affichés et lorsqu'une touche réduction est activée, toutes les modifications d'agrandissement fixées et tous les agrandissements fixés disponibles dans un mode reduction sont affichés.

6. Dispositif selon la revendication 5, dans lequel dans l'éventualité où un agrandissement longitudinal et latéral indépendant varie, seuls les agrandissements sont affichés et dans l'éventualité où un agrandissement indépendant varie, un agrandissement longitudinal et latéral est affiché.

7. Dispositif selon l'une quelconque des revendications 5 et 6, dans lequel lorsque le même agrandissement que l'une quelconque des modifications d'agrandissement fixées est atteint pendant un zoom d'agrandissement ou pendant un zoom de réduction, toutes les modifications d'agrandissement fixées (réduction ou agrandissement) et tous les agrandissements fixés sont affichés.

8. Dispositif selon la revendication 6 ou 7, dans lequel lorsque l'agrandissement diffère des agrandissements fixés, tous les affichages sont coupés.

9. Dispositif selon l'une quelconque des revendications 7 et 8, dans lequel lorsqu'un zoom d'agrandissement ou un zoom de réduction est effectué à l'instant où le mode modification d'agrandissement indépendant est établi, le mode modification d'agrandissement indépendant est remis à zéro à l'aide de l'agrandissement longitudinal en tant que référence.

10. Dispositif selon l'une quelconque des revendications 7 à 9, dans lequel lorsqu'un zoom d'agrandissement ou un zoom de réduction est effectué à l'instant où le mode modification d'agrandissement indépendant est établi, le mode modification d'agrandissement indépendant est remis à zéro en utilisant la dimension latérale en tant que référence.

11. Dispositif selon l'une quelconque des revendications 7 à 10, dans lequel lorsque le zoom d'agrandissement ou le zoom de reduction est effectué à l'instant où le mode modification d'agrandissement indépendant est établi, à la fois les dimensions longitudinale et latérale sont augmentées ou diminuées.

12. Dispositif de reproduction d'image comprenant :

    les modes de modification d'agrandissement en dimension, chacun desdits modes permettant la modification d'une dimension respective prise parmi les dimensions longitudinale et latérale de l'original ou du document qui doit être copié et de la copie ;

    des touches pour entrer lesdits modes ;

    un affichage agencé pour afficher des dimensions longitudinale et latérale de l'original ou du document qui doit être copié et de la copie ;

    le dispositif étant agencé de telle sorte que si un mode est choisi et si sa dimension respective est nouvellement entrée, la dimension nouvellement entrée soit affichée ensemble avec les dimensions inchangées.

**13.** Dispositif selon la revendication 12, dans lequel lorsque les données entrées sont présentes, lesdites données et/ou un soulignement sont amenés à clignoter tandis que lorsqu'aucune donnée n'est présente, seul le soulignement est amené à clignoter.

**14.** Dispositif selon l'une quelconque des revendications 12 et 13, dans lequel les modes modifications d'agrandissement sont indépendants et lorsque la modification d'agrandissement en dimension est entrée dans le mode modification d'agrandissement indépendant, la modification d'agrandissement indépendant est remise à l'état initial.

**15.** Dispositif selon l'une quelconque des revendications 12 à 14, dans lequel, lorsqu'aucune particulière des touches n'est activée, simultanément à une quelconque touche de zoom, soit une touche agrandissement et une touche réduction, priorité est donnée à ladite touche particulière.

**16.** Dispositif selon l'une quelconque des revendications 12 à 15, dans lequel des données de dimension sont effacées lorsqu'une autre touche de modification d'agrandissement est activée ou lorsqu'une remise à l'état initial automatique est exécutée.

**17.** Dispositif selon l'une quelconque des revendications 12 à 16, dans lequel un agrandissement est calculé lorsque la même touche est activée à nouveau, lorsqu'une touche entrée est activée ou lorsqu'une touche démarrage est activée.

**18.** Dispositif selon la revendication 17, dans lequel un agrandissement n'est pas modifié lorsqu'à la fois la dimension longitudinale d'une copie et la dimension longitudinale d'un document ne sont pas entrées.

**19.** Dispositif selon l'une quelconque des revendications 17 et 18, dans lequel un agrandissement n'est pas modifié lorsqu'à la fois la dimension latérale d'une copie et la dimension latérale d'un document ne sont pas entrées.

**20.** Dispositif selon l'une quelconque des revendications 17 à 19, dans lequel lorsqu'un établissement de données est supérieur à une valeur maximum d'une modification d'agrandissement ou est inférieur à une valeur minimum de celle-ci, ladite valeur maximum ou ladite valeur minimum est choisie en tant que données tandis que dans le même temps, un avertissement est produit.

FIG. 1

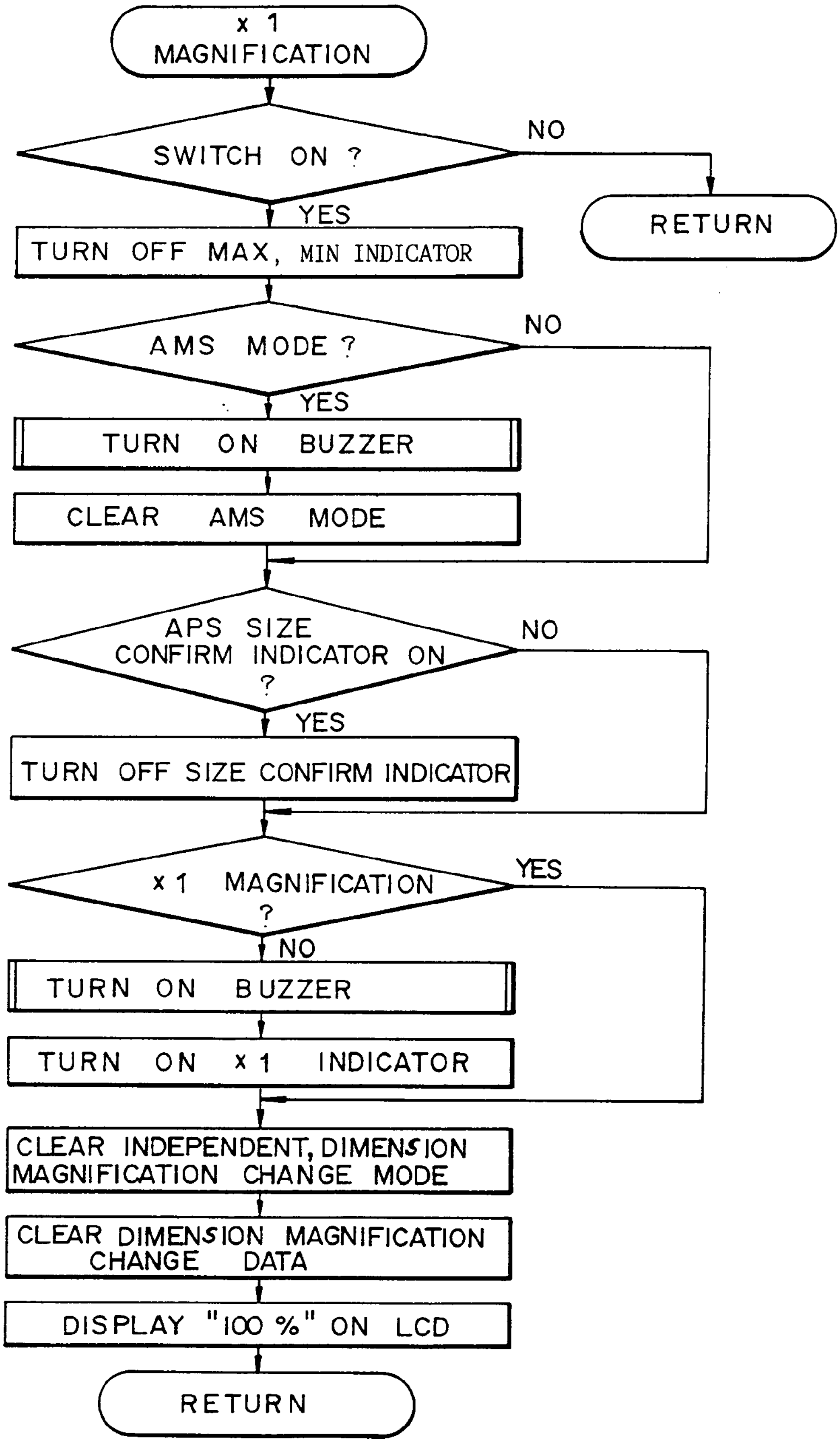
x 1
MAGNIFICATION
SWITCH ON ?
NO
YES
RETURN
TURN OFF MAX, MIN INDICATOR
AMS MODE ?
NO
YES
TURN ON BUZZER
CLEAR AMS MODE
APS SIZE
CONFIRM INDICATOR ON
?
NO
YES
TURN OFF SIZE CONFIRM INDICATOR
x 1 MAGNIFICATION
?
YES
NO
TURN ON BUZZER
TURN ON x 1 INDICATOR
CLEAR INDEPENDENT, DIMENSION
MAGNIFICATION CHANGE MODE
CLEAR DIMENSION MAGNIFICATION
CHANGE DATA
DISPLAY "100 %" ON LCD
RETURN

FIG. 2

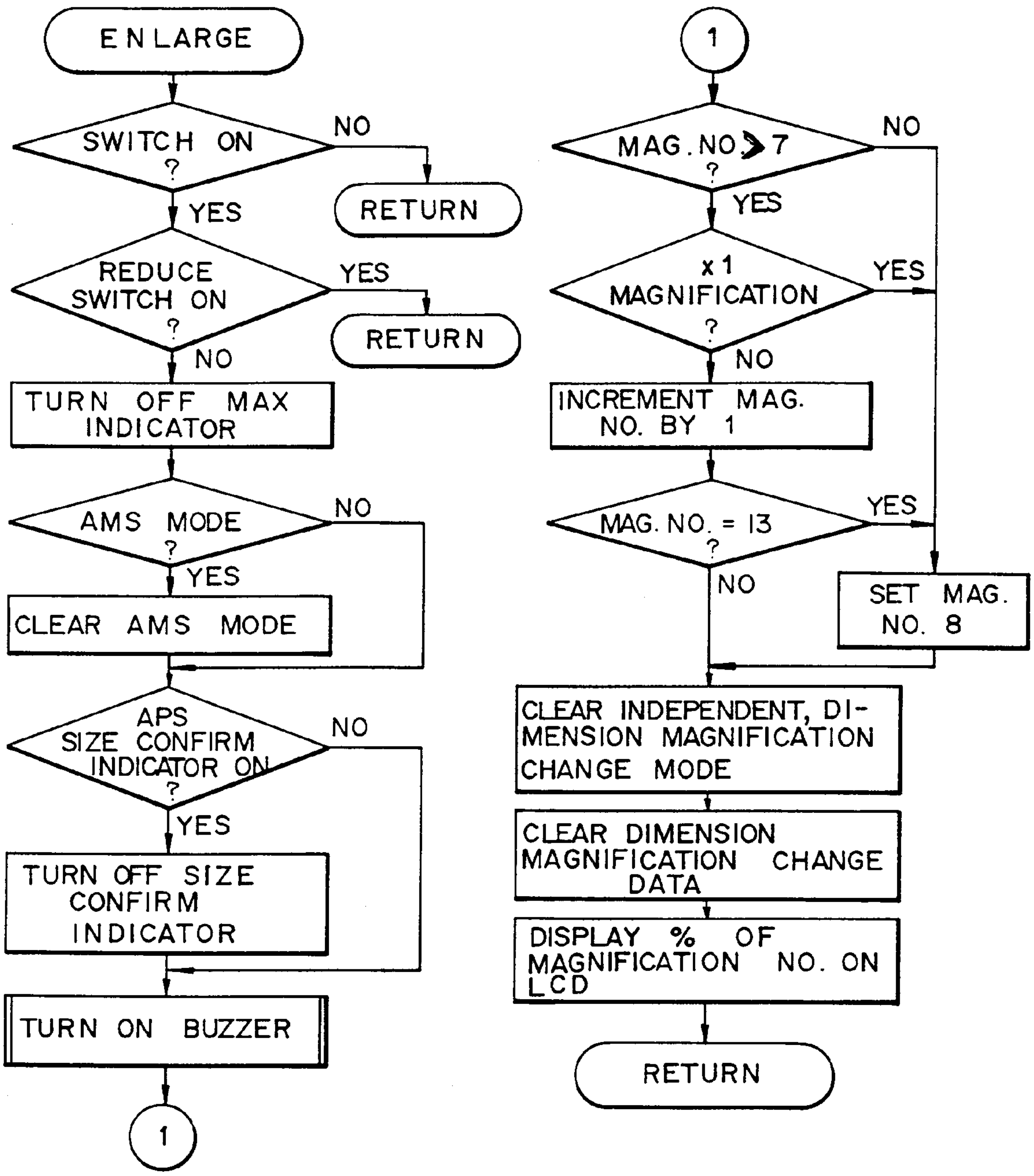


NO.

| | | |
|---|---|---|
| 1-25% | 6-87% | 11-200% |
| 2-50% | 7-93% | 12-400% |
| 3-61% | 8-115% | |
| 4-71% | 9-122% | |
| 5-82% | 10-141% | |

FIG. 3

FIG. 4

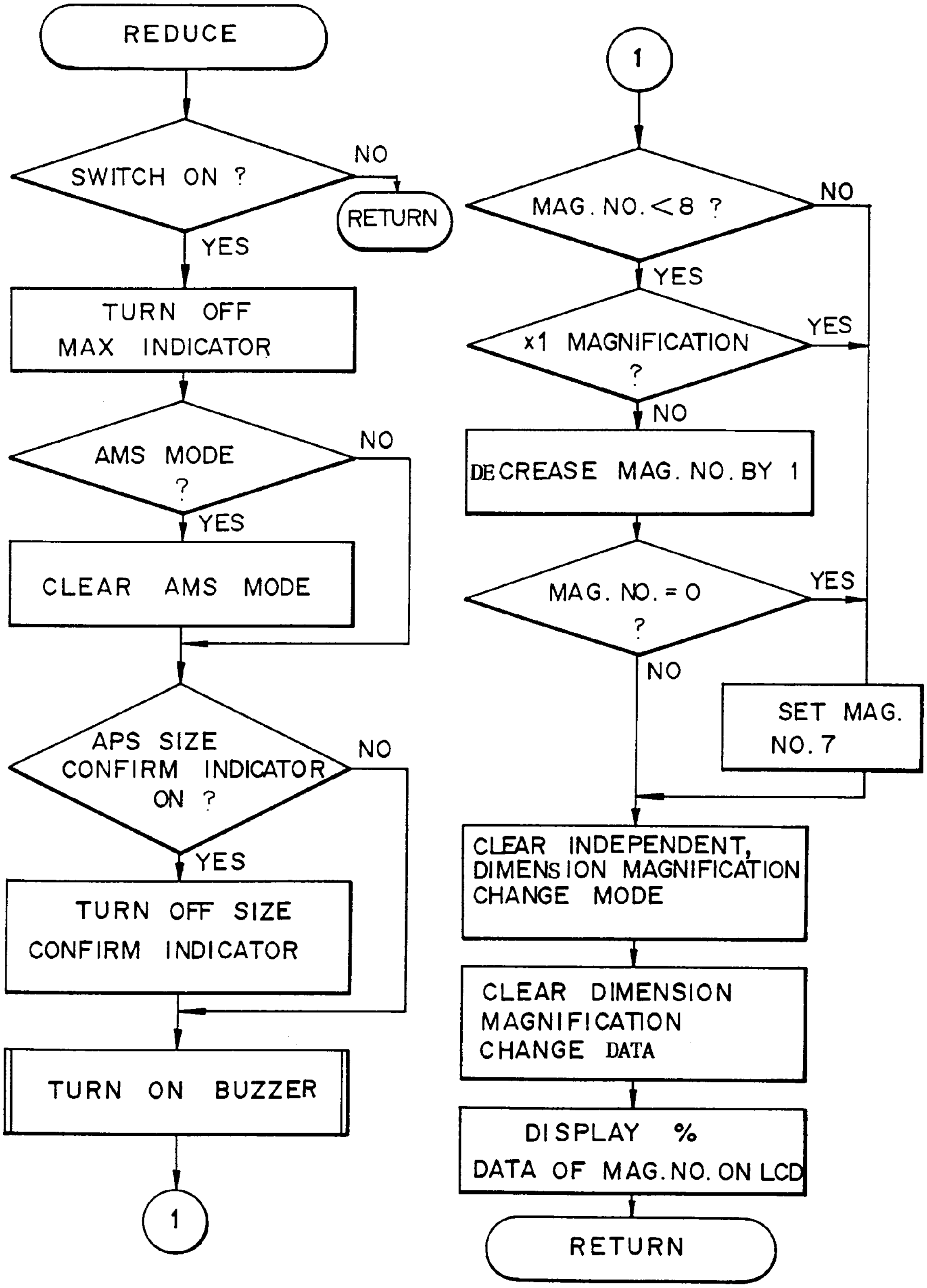
REDUCE
SWITCH ON ?
NO
RETURN
YES
TURN OFF MAX INDICATOR
AMS MODE ?
NO
YES
CLEAR AMS MODE
APS SIZE CONFIRM INDICATOR ON ?
NO
YES
TURN OFF SIZE CONFIRM INDICATOR
TURN ON BUZZER
1
1
MAG. NO. <8 ?
NO
YES
x1 MAGNIFICATION ?
YES
NO
DECREASE MAG. NO. BY 1
MAG. NO. = 0 ?
YES
NO
SET MAG. NO. 7
CLEAR INDEPENDENT, DIMENSION MAGNIFICATION CHANGE MODE
CLEAR DIMENSION MAGNIFICATION CHANGE DATA
DISPLAY % DATA OF MAG. NO. ON LCD
RETURN

FIG. 5

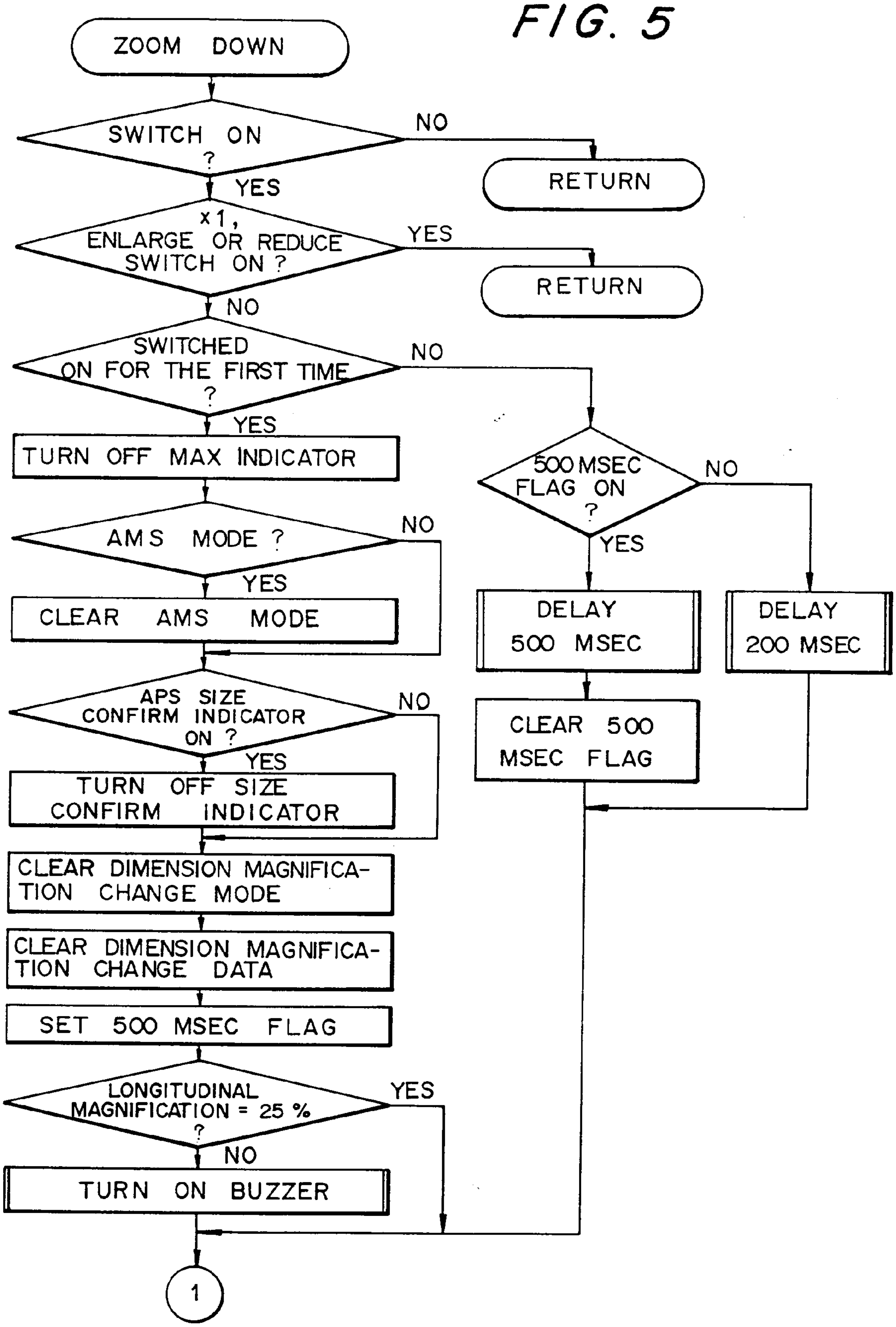
ZOOM DOWN
SWITCH ON ?
NO
RETURN
YES
x1, ENLARGE OR REDUCE SWITCH ON ?
YES
RETURN
NO
SWITCHED ON FOR THE FIRST TIME ?
NO
YES
TURN OFF MAX INDICATOR
500 MSEC FLAG ON ?
NO
YES
AMS MODE ?
NO
YES
CLEAR AMS MODE
DELAY 500 MSEC
DELAY 200 MSEC
APS SIZE CONFIRM INDICATOR ON ?
NO
YES
CLEAR 500 MSEC FLAG
TURN OFF SIZE CONFIRM INDICATOR
CLEAR DIMENSION MAGNIFICATION CHANGE MODE
CLEAR DIMENSION MAGNIFICATION CHANGE DATA
SET 500 MSEC FLAG
LONGITUDINAL MAGNIFICATION = 25 % ?
YES
NO
TURN ON BUZZER
1

FIG. 6

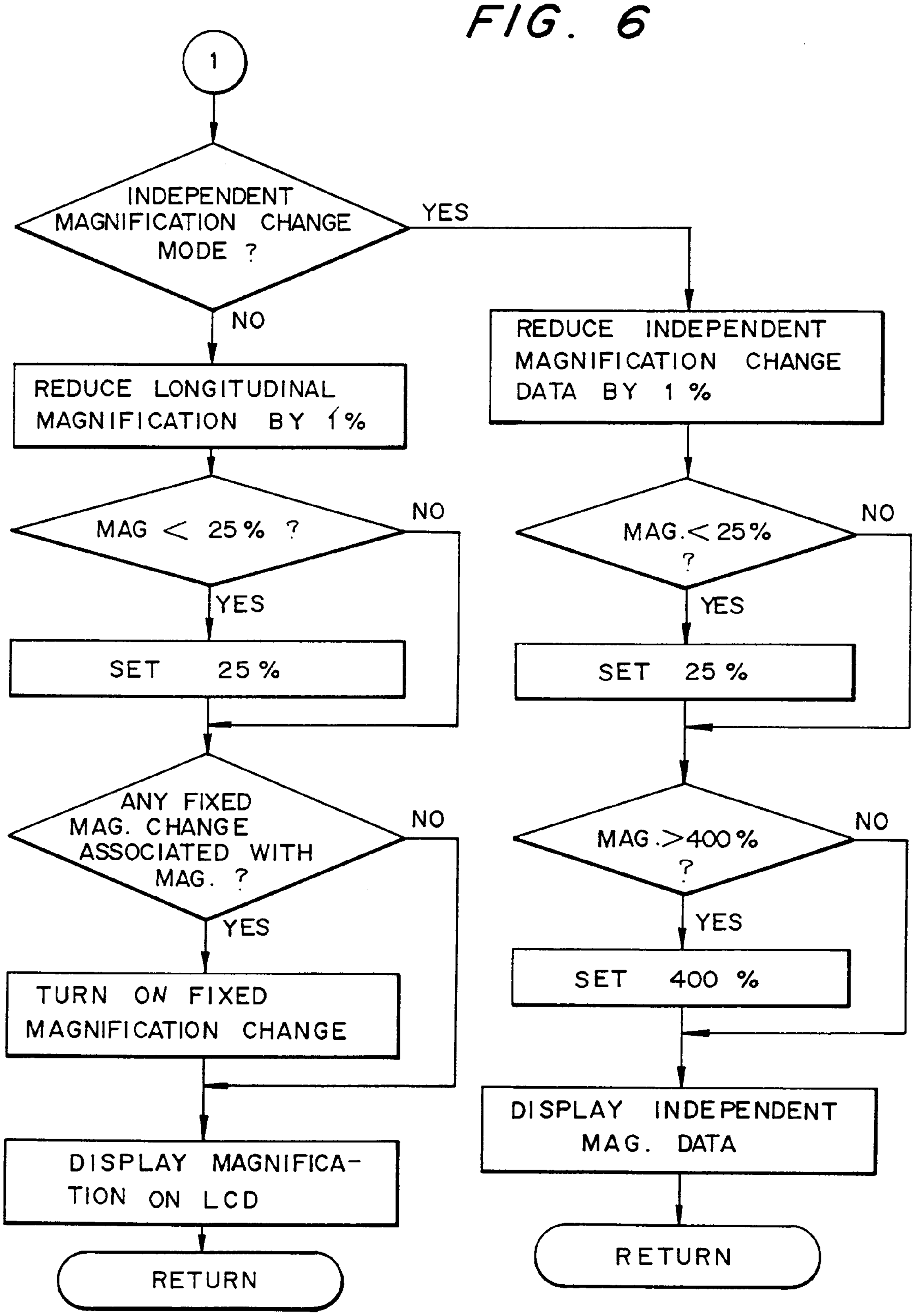
1
INDEPENDENT MAGNIFICATION CHANGE MODE ?
YES
NO
REDUCE LONGITUDINAL MAGNIFICATION BY 1%
MAG < 25% ?
NO
YES
SET 25%
ANY FIXED MAG. CHANGE ASSOCIATED WITH MAG. ?
NO
YES
TURN ON FIXED MAGNIFICATION CHANGE
DISPLAY MAGNIFICATION ON LCD
RETURN
REDUCE INDEPENDENT MAGNIFICATION CHANGE DATA BY 1 %
MAG.< 25% ?
NO
YES
SET 25 %
MAG.>400% ?
NO
YES
SET 400 %
DISPLAY INDEPENDENT MAG. DATA
RETURN

FIG. 7

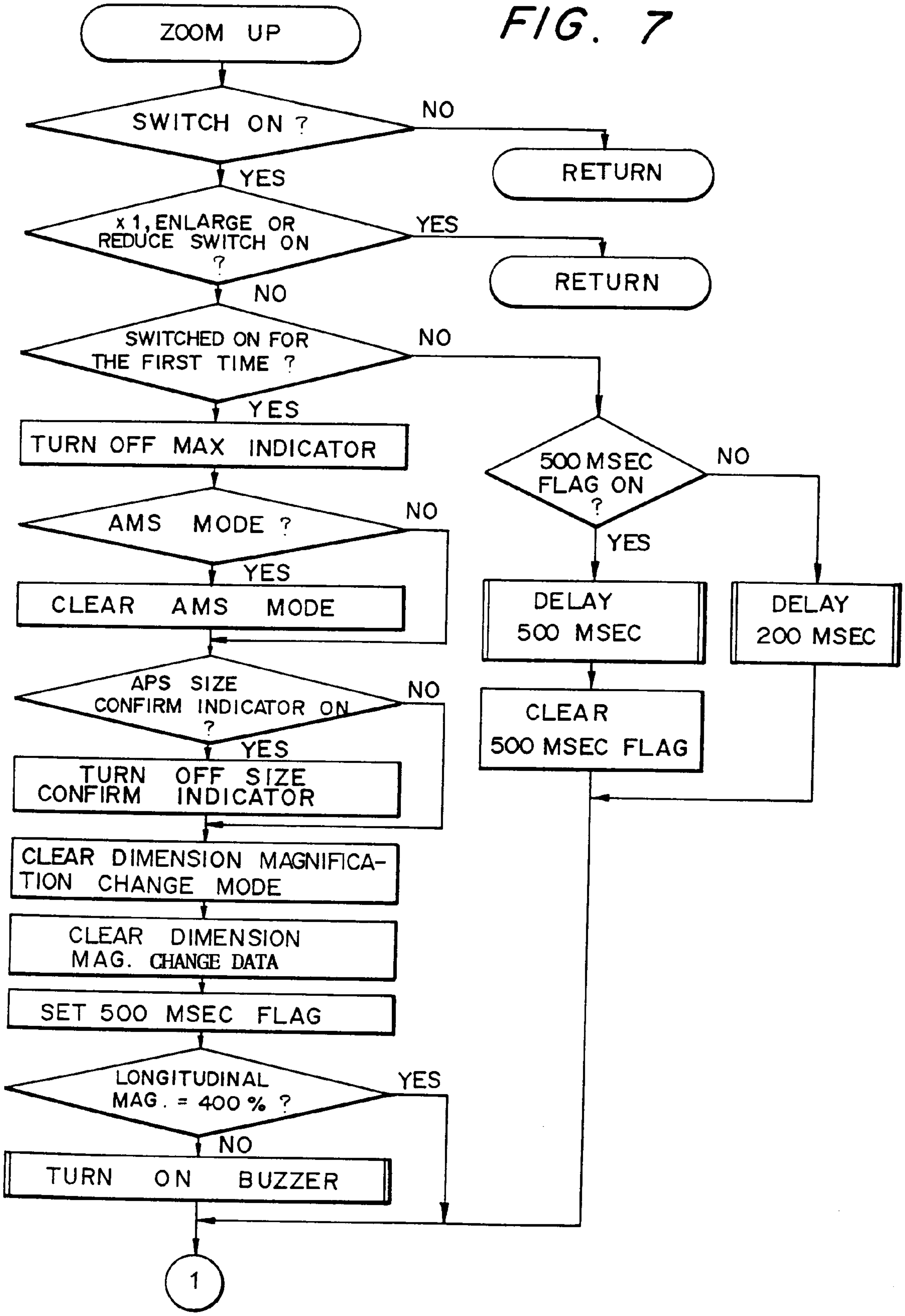
ZOOM UP
SWITCH ON ?
NO
RETURN
YES
x 1, ENLARGE OR REDUCE SWITCH ON ?
YES
RETURN
NO
SWITCHED ON FOR THE FIRST TIME ?
NO
YES
TURN OFF MAX INDICATOR
AMS MODE ?
NO
YES
CLEAR AMS MODE
APS SIZE CONFIRM INDICATOR ON ?
NO
YES
TURN OFF SIZE CONFIRM INDICATOR
CLEAR DIMENSION MAGNIFICA-TION CHANGE MODE
CLEAR DIMENSION MAG. CHANGE DATA
SET 500 MSEC FLAG
LONGITUDINAL MAG. = 400 % ?
YES
NO
TURN ON BUZZER
500 MSEC FLAG ON ?
NO
YES
DELAY 500 MSEC
DELAY 200 MSEC
CLEAR 500 MSEC FLAG
1

FIG. 8

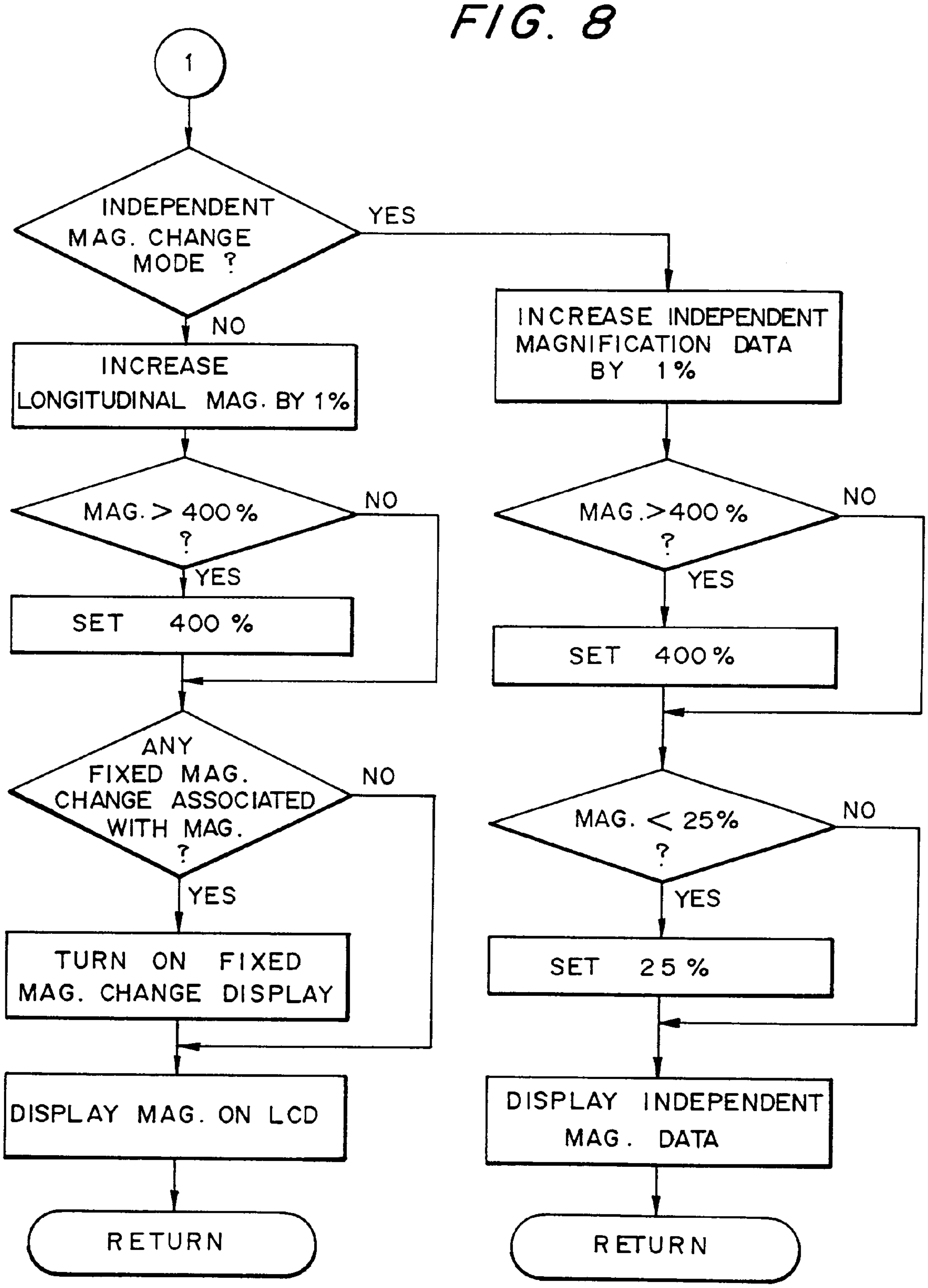
1
INDEPENDENT MAG. CHANGE MODE ?
YES
NO
INCREASE LONGITUDINAL MAG. BY 1%
MAG. > 400 % ?
NO
YES
SET 400 %
ANY FIXED MAG. CHANGE ASSOCIATED WITH MAG. ?
NO
YES
TURN ON FIXED MAG. CHANGE DISPLAY
DISPLAY MAG. ON LCD
RETURN
INCREASE INDEPENDENT MAGNIFICATION DATA BY 1%
MAG.>400 % ?
NO
YES
SET 400%
MAG. < 25% ?
NO
YES
SET 25 %
DISPLAY INDEPENDENT MAG. DATA
RETURN

FIG. 9

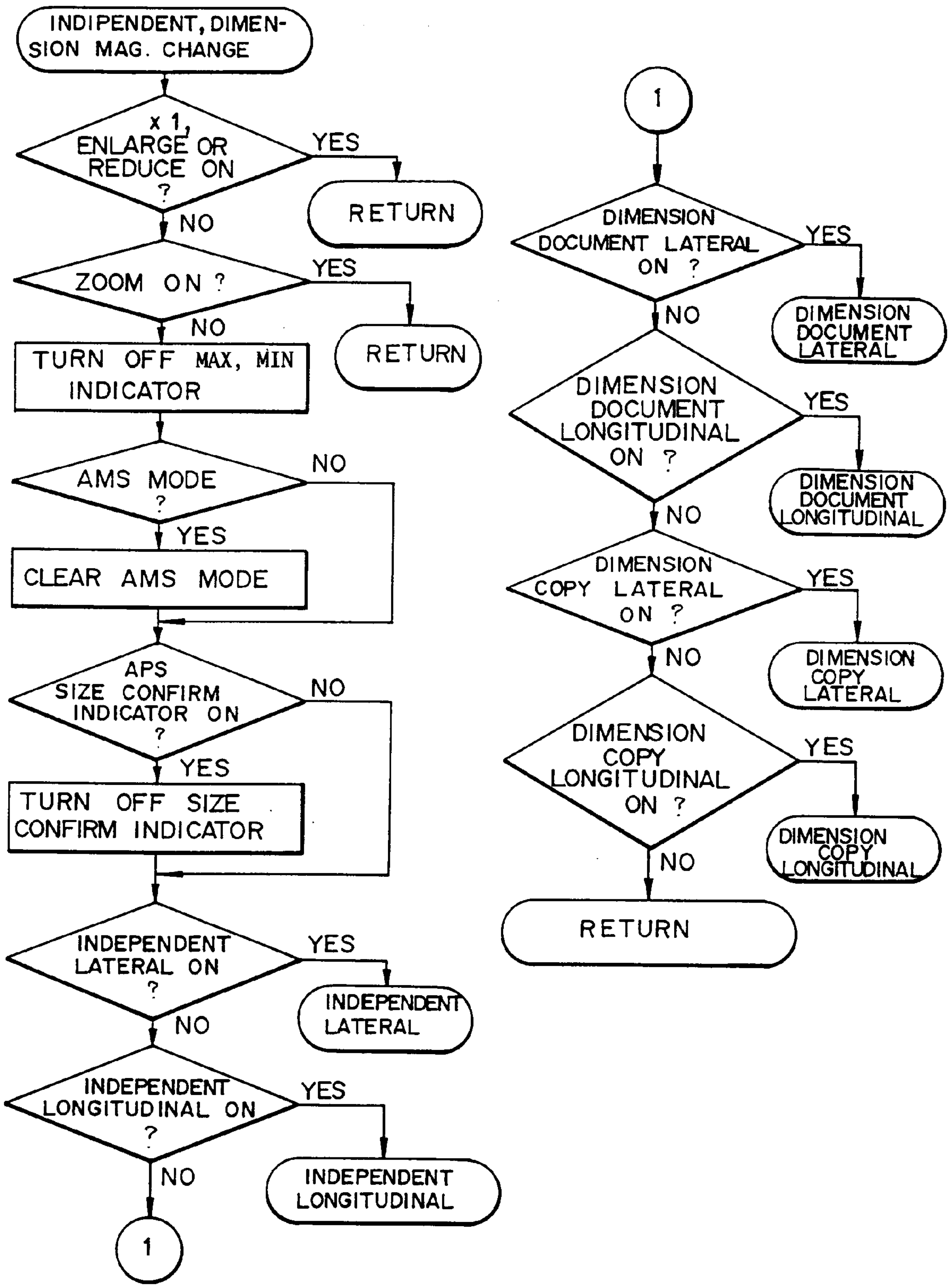
INDIPENDENT, DIMENSION MAG. CHANGE
x 1, ENLARGE OR REDUCE ON ?
YES
RETURN
NO
ZOOM ON ?
YES
RETURN
NO
TURN OFF MAX, MIN INDICATOR
AMS MODE ?
NO
YES
CLEAR AMS MODE
APS SIZE CONFIRM INDICATOR ON ?
NO
YES
TURN OFF SIZE CONFIRM INDICATOR
INDEPENDENT LATERAL ON ?
YES
INDEPENDENT LATERAL
NO
INDEPENDENT LONGITUDINAL ON ?
YES
INDEPENDENT LONGITUDINAL
NO
1
1
DIMENSION DOCUMENT LATERAL ON ?
YES
DIMENSION DOCUMENT LATERAL
NO
DIMENSION DOCUMENT LONGITUDINAL ON ?
YES
DIMENSION DOCUMENT LONGITUDINAL
NO
DIMENSION COPY LATERAL ON ?
YES
DIMENSION COPY LATERAL
NO
DIMENSION COPY LONGITUDINAL ON ?
YES
DIMENSION COPY LONGITUDINAL
NO
RETURN

FIG. 10

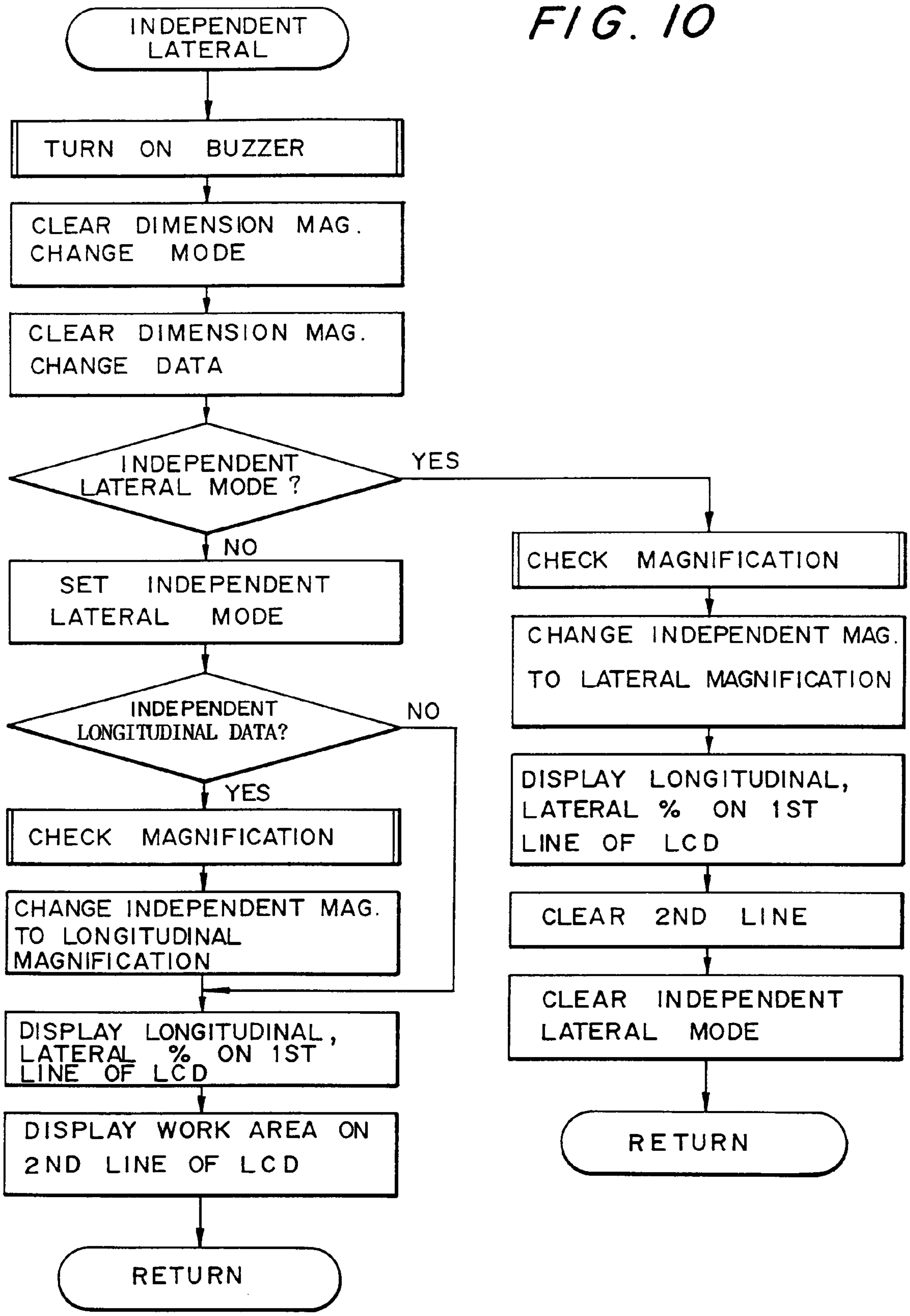
INDEPENDENT LATERAL
TURN ON BUZZER
CLEAR DIMENSION MAG. CHANGE MODE
CLEAR DIMENSION MAG. CHANGE DATA
INDEPENDENT LATERAL MODE ?
YES
NO
SET INDEPENDENT LATERAL MODE
INDEPENDENT LONGITUDINAL DATA?
NO
YES
CHECK MAGNIFICATION
CHANGE INDEPENDENT MAG. TO LONGITUDINAL MAGNIFICATION
DISPLAY LONGITUDINAL, LATERAL % ON 1ST LINE OF LCD
DISPLAY WORK AREA ON 2ND LINE OF LCD
RETURN
CHECK MAGNIFICATION
CHANGE INDEPENDENT MAG. TO LATERAL MAGNIFICATION
DISPLAY LONGITUDINAL, LATERAL % ON 1ST LINE OF LCD
CLEAR 2ND LINE
CLEAR INDEPENDENT LATERAL MODE
RETURN

FIG. 11

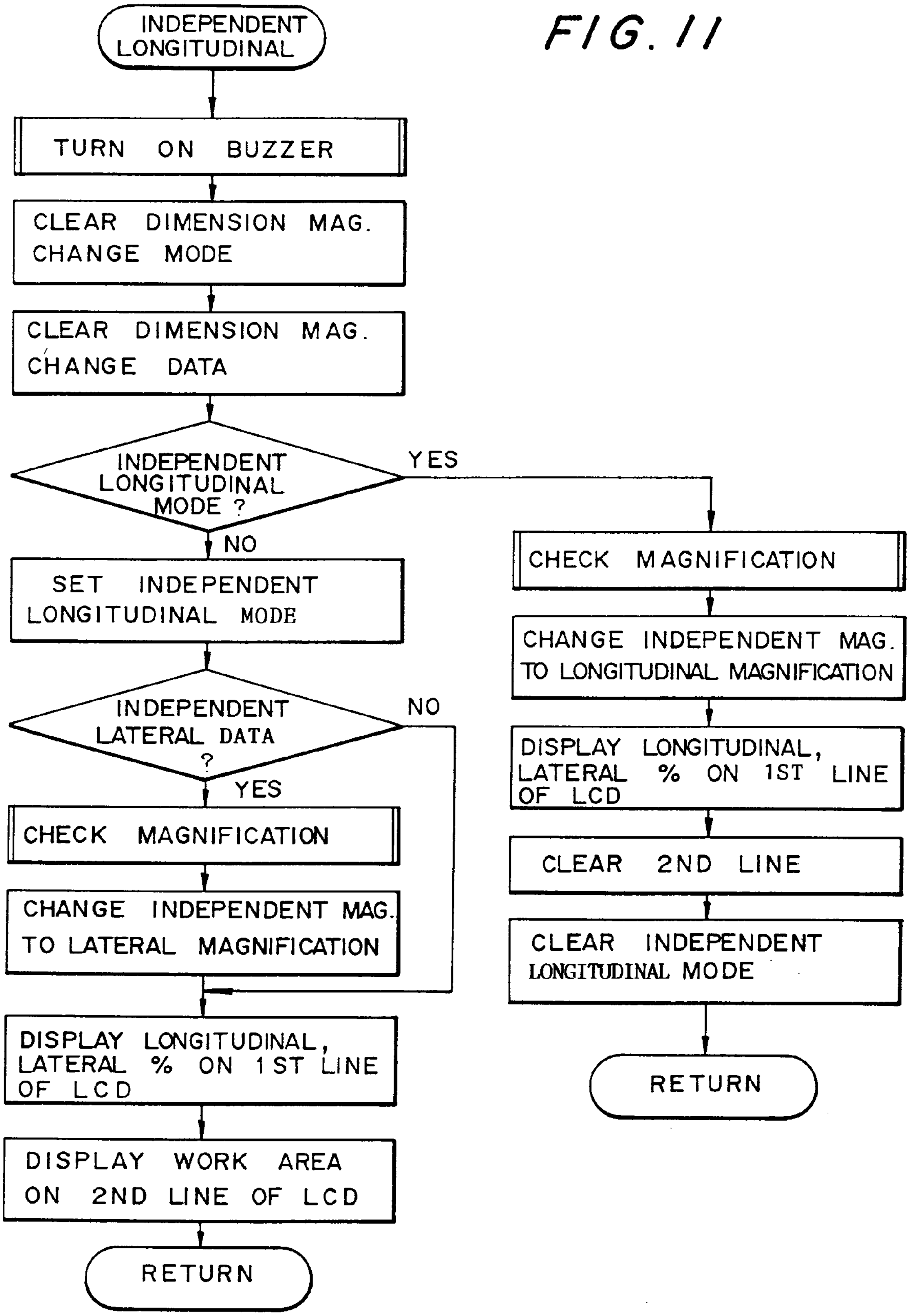
INDEPENDENT LONGITUDINAL
TURN ON BUZZER
CLEAR DIMENSION MAG. CHANGE MODE
CLEAR DIMENSION MAG. CHANGE DATA
INDEPENDENT LONGITUDINAL MODE ?
YES
NO
SET INDEPENDENT LONGITUDINAL MODE
INDEPENDENT LATERAL DATA ?
NO
YES
CHECK MAGNIFICATION
CHANGE INDEPENDENT MAG. TO LATERAL MAGNIFICATION
DISPLAY LONGITUDINAL, LATERAL % ON 1ST LINE OF LCD
DISPLAY WORK AREA ON 2ND LINE OF LCD
RETURN
CHECK MAGNIFICATION
CHANGE INDEPENDENT MAG. TO LONGITUDINAL MAGNIFICATION
DISPLAY LONGITUDINAL, LATERAL % ON 1ST LINE OF LCD
CLEAR 2ND LINE
CLEAR INDEPENDENT LONGITUDINAL MODE
RETURN

FIG. 12

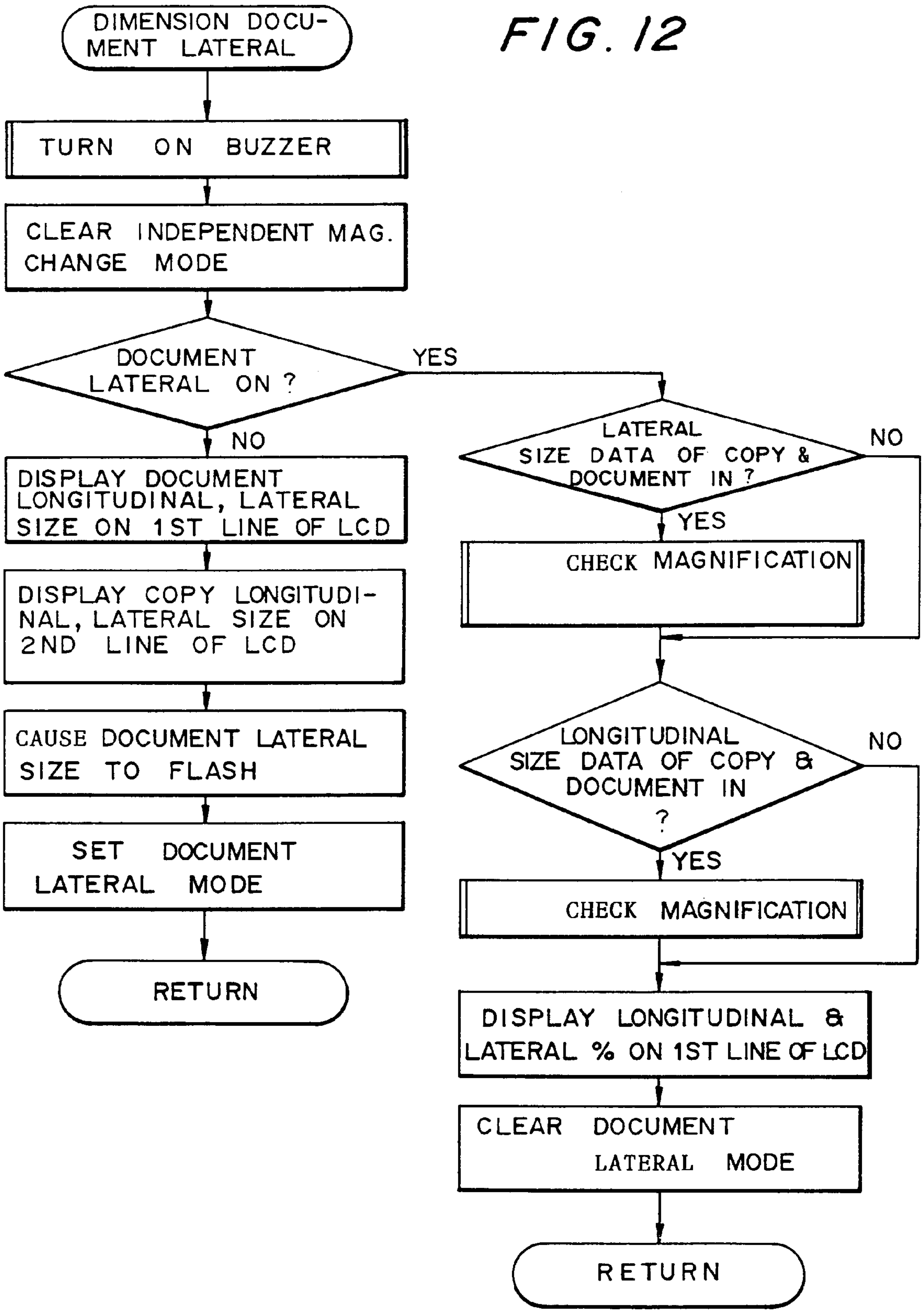
DIMENSION DOCUMENT LATERAL
TURN ON BUZZER
CLEAR INDEPENDENT MAG. CHANGE MODE
DOCUMENT LATERAL ON ?
YES
NO
DISPLAY DOCUMENT LONGITUDINAL, LATERAL SIZE ON 1ST LINE OF LCD
DISPLAY COPY LONGITUDINAL, LATERAL SIZE ON 2ND LINE OF LCD
CAUSE DOCUMENT LATERAL SIZE TO FLASH
SET DOCUMENT LATERAL MODE
RETURN
LATERAL SIZE DATA OF COPY & DOCUMENT IN ?
NO
YES
CHECK MAGNIFICATION
LONGITUDINAL SIZE DATA OF COPY & DOCUMENT IN ?
NO
YES
CHECK MAGNIFICATION
DISPLAY LONGITUDINAL & LATERAL % ON 1ST LINE OF LCD
CLEAR DOCUMENT LATERAL MODE
RETURN

FIG. 13

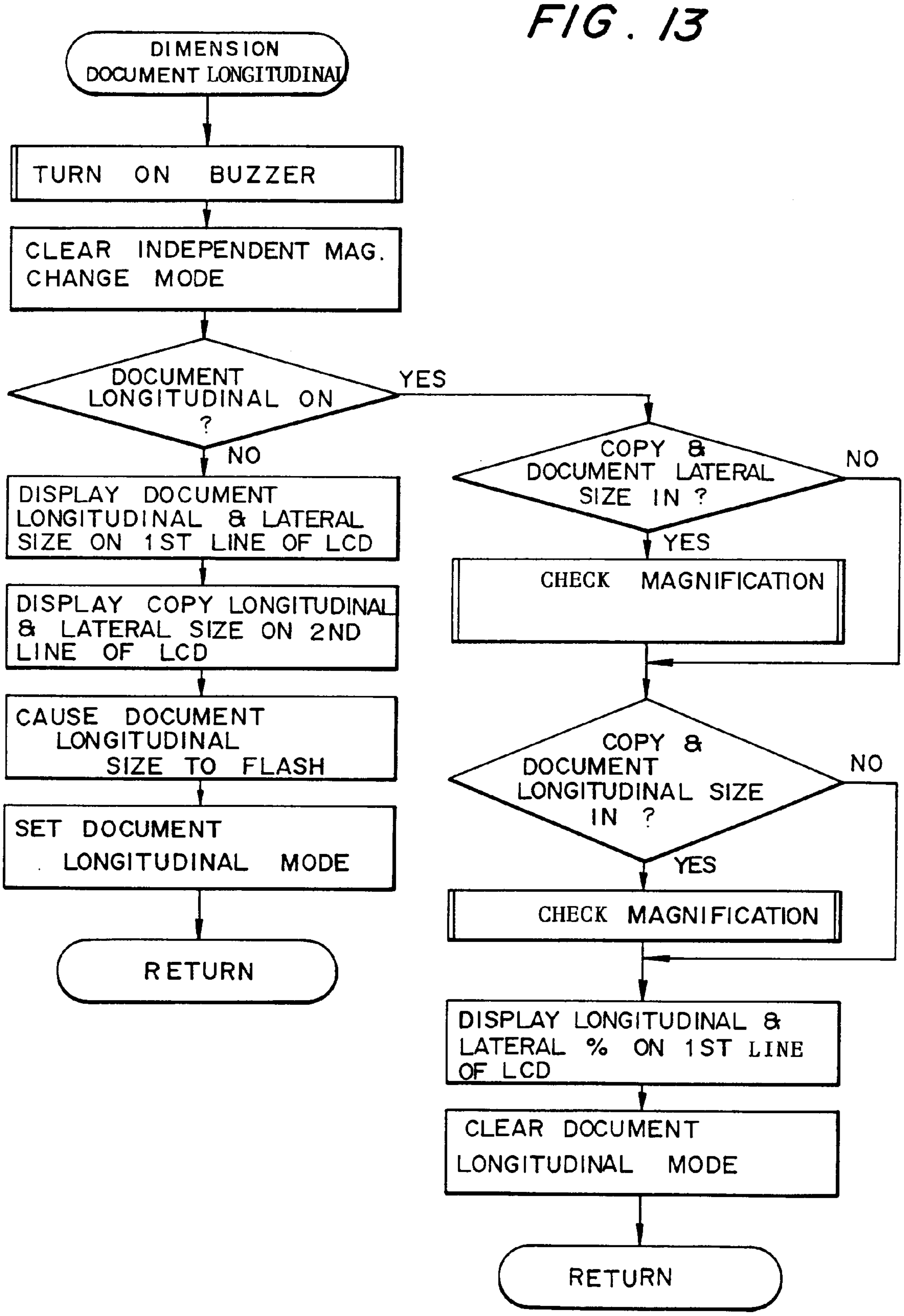
DIMENSION DOCUMENT LONGITUDINAL
TURN ON BUZZER
CLEAR INDEPENDENT MAG. CHANGE MODE
DOCUMENT LONGITUDINAL ON ?
YES
NO
DISPLAY DOCUMENT LONGITUDINAL & LATERAL SIZE ON 1ST LINE OF LCD
DISPLAY COPY LONGITUDINAL & LATERAL SIZE ON 2ND LINE OF LCD
CAUSE DOCUMENT LONGITUDINAL SIZE TO FLASH
SET DOCUMENT LONGITUDINAL MODE
RETURN
COPY & DOCUMENT LATERAL SIZE IN ?
NO
YES
CHECK MAGNIFICATION
COPY & DOCUMENT LONGITUDINAL SIZE IN ?
NO
YES
CHECK MAGNIFICATION
DISPLAY LONGITUDINAL & LATERAL % ON 1ST LINE OF LCD
CLEAR DOCUMENT LONGITUDINAL MODE
RETURN

FIG. 14

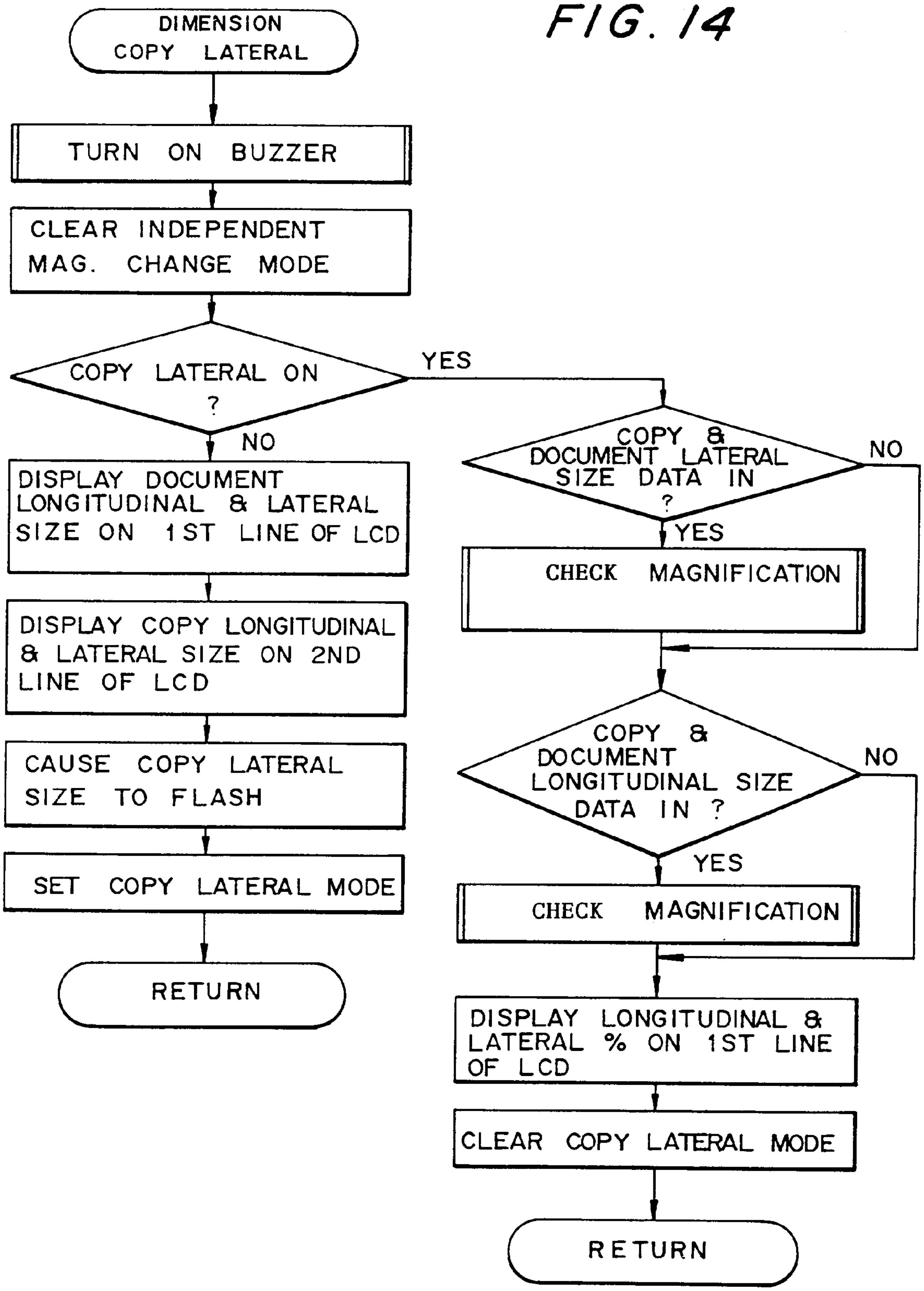
DIMENSION COPY LATERAL
TURN ON BUZZER
CLEAR INDEPENDENT MAG. CHANGE MODE
COPY LATERAL ON ?
YES
NO
DISPLAY DOCUMENT LONGITUDINAL & LATERAL SIZE ON 1ST LINE OF LCD
DISPLAY COPY LONGITUDINAL & LATERAL SIZE ON 2ND LINE OF LCD
CAUSE COPY LATERAL SIZE TO FLASH
SET COPY LATERAL MODE
RETURN
COPY & DOCUMENT LATERAL SIZE DATA IN ?
NO
YES
CHECK MAGNIFICATION
COPY & DOCUMENT LONGITUDINAL SIZE DATA IN ?
NO
YES
CHECK MAGNIFICATION
DISPLAY LONGITUDINAL & LATERAL % ON 1ST LINE OF LCD
CLEAR COPY LATERAL MODE
RETURN

FIG. 15

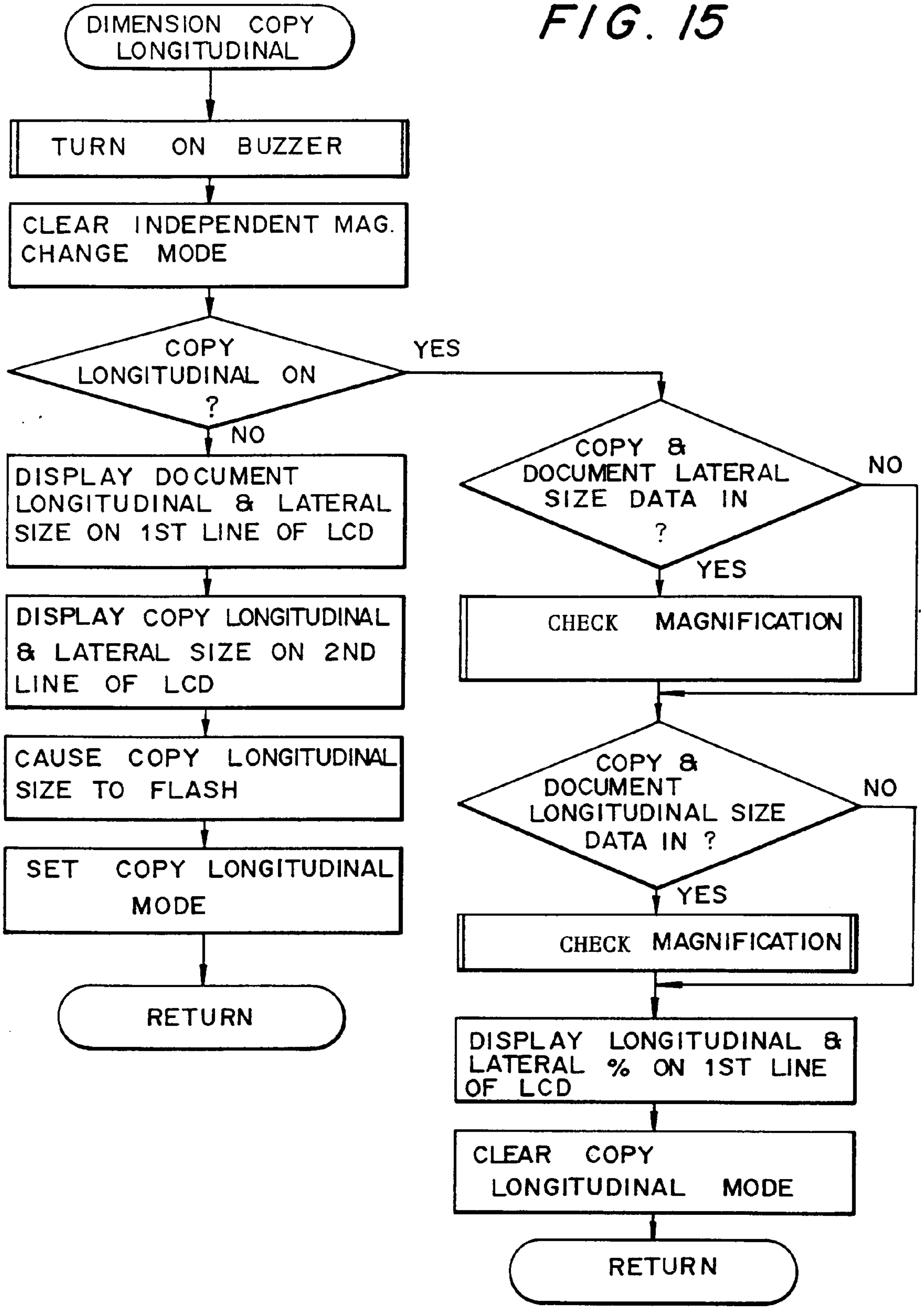
DIMENSION COPY LONGITUDINAL
TURN ON BUZZER
CLEAR INDEPENDENT MAG. CHANGE MODE
COPY LONGITUDINAL ON ?
YES
NO
DISPLAY DOCUMENT LONGITUDINAL & LATERAL SIZE ON 1ST LINE OF LCD
DISPLAY COPY LONGITUDINAL & LATERAL SIZE ON 2ND LINE OF LCD
CAUSE COPY LONGITUDINAL SIZE TO FLASH
SET COPY LONGITUDINAL MODE
RETURN
COPY & DOCUMENT LATERAL SIZE DATA IN ?
NO
YES
CHECK MAGNIFICATION
COPY & DOCUMENT LONGITUDINAL SIZE DATA IN ?
NO
YES
CHECK MAGNIFICATION
DISPLAY LONGITUDINAL & LATERAL % ON 1ST LINE OF LCD
CLEAR COPY LONGITUDINAL MODE
RETURN

FIG. 16

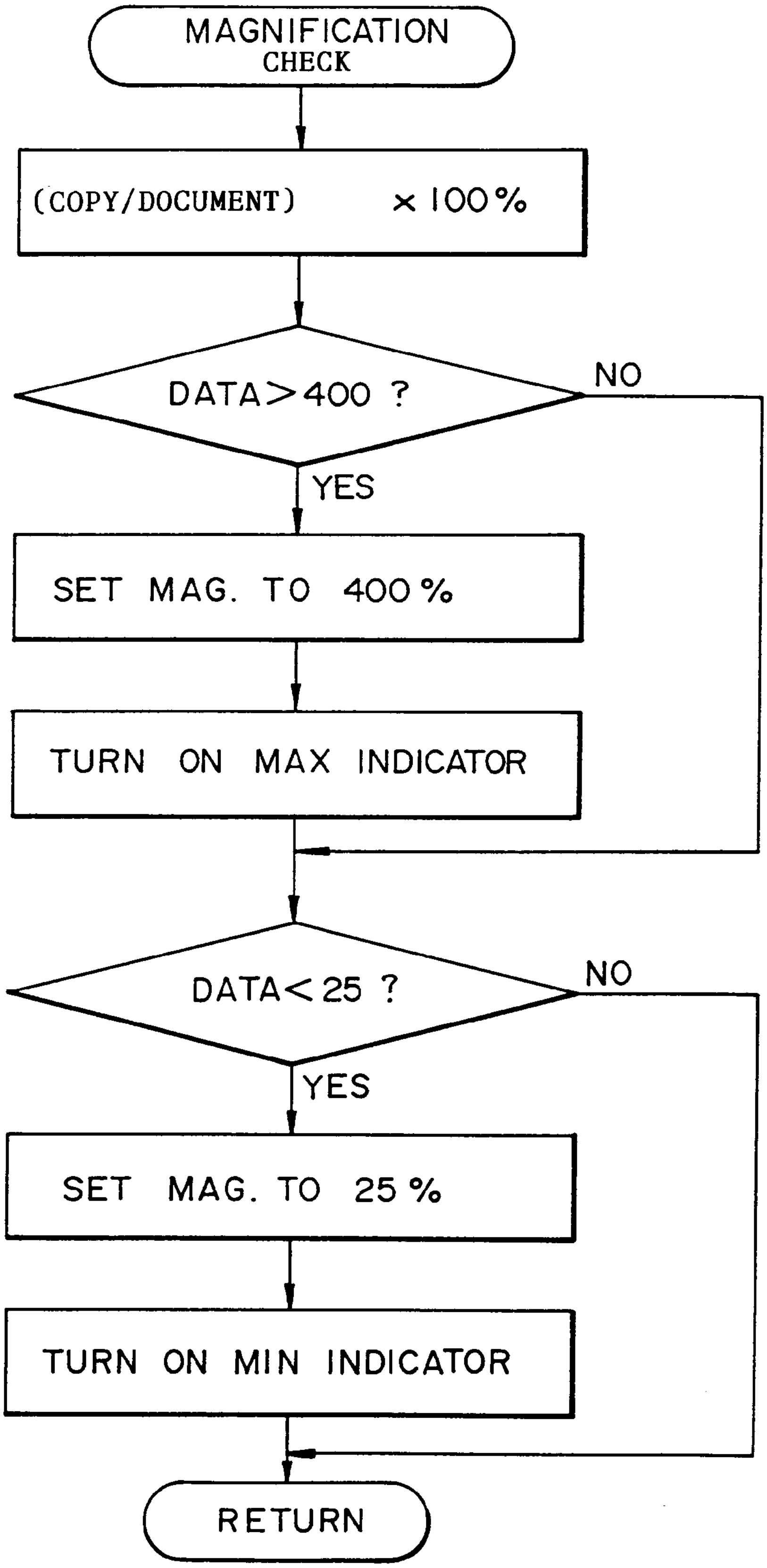
MAGNIFICATION CHECK
(COPY/DOCUMENT) × 100%
DATA>400 ?
NO
YES
SET MAG. TO 400%
TURN ON MAX INDICATOR
DATA<25 ?
NO
YES
SET MAG. TO 25%
TURN ON MIN INDICATOR
RETURN